(19) Europäisches Patentamt
European Patent Office
Office européen des brevets

(11) **EP 3 125 346 A1**

(12) **EUROPEAN PATENT APPLICATION**
published in accordance with Art. 153(4) EPC

(43) Date of publication:
01.02.2017 Bulletin 2017/05

(51) Int Cl.:
$H01M\ 8/02$ $(2016.01)$     $C01F\ 17/00$ $(2006.01)$
$C01G\ 3/00$ $(2006.01)$     $C01G\ 9/00$ $(2006.01)$
$H01B\ 1/06$ $(2006.01)$     $H01M\ 8/10$ $(2016.01)$

(21) Application number: 15769786.3

(22) Date of filing: 25.03.2015

(86) International application number:
PCT/JP2015/059075

(87) International publication number:
WO 2015/147036 (01.10.2015 Gazette 2015/39)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: 26.03.2014 JP 2014062904

(71) Applicant: **Tokuyama Corporation**
**Shunan-shi, Yamaguchi-ken 745-8648 (JP)**

(72) Inventors:
• **KAMADA, Kai**
**Nagasaki-shi**
**Nagasaki 850-0045 (JP)**
• **WATANABE, Shin**
**Shunan-shi**
**Yamaguchi 745-8648 (JP)**
• **YANAGI, Hiroyuki**
**Shunan-shi**
**Yamaguchi 745-8648 (JP)**

(74) Representative: **Schlief, Thomas P.**
**Canzler & Bergmeier**
**Patentanwälte Partnerschaft mbB**
**Friedrich-Ebert-Straße 84**
**85055 Ingolstadt (DE)**

(54) **ANION CONDUCTOR AND LAYERED METAL HYDROXIDE**

(57) The present invention provides a novel anion conductor which comprises a layered metal hydroxide and can be used as an alkaline electrolyte film for use in a fuel cell or the like. An anion conductor characterized by comprising a molded product of a layered metal hydroxide represented by formula (1): $[M_x(OH)_y(A)_{(\alpha x-y)/z}-nH_2O]$ (wherein M represents a metal that can serve as a bivalent or trivalent cation; $\alpha$ represents the number of valency of the metal M, A represents an atom or an atomic group that can serve as an anion, and z represents the number of valency of the anion A, wherein, when $(\alpha x-y)/z$ is 2 or greater, A's may be different types of anions which can serve as anions having the same valencies as each other, or may be anions having different valencies from each other; and n represents the average number of molecules of interlayer water contained per one repeating unit). The anion conductor according to the present invention is composed of an inorganic material, and therefore has excellent heat resistance and physical strength and can be operated for a longer period at a higher temperature compared with the conventional ones when used as an anion conductor for a fuel cell, an air cell or the like.

[FIG.1]

**Description**

## TECHNICAL FIELD

The present invention relates to an anion conductor and a novel layered hydroxide which can be used as the anion conductor.

## DESCRIPTION OF THE RELATED ART

The fuel cell is the power generation system which takes out the chemical energy as the electric power. It is categorized to an alkaline type, a phosphoric acid type, a molten carbonate type, a solid electrolyte type and a solid polymer type based on the operation mechanism and the material used; and the fuel cells of various forms are proposed and examined. Among these, the alkaline type fuel cell and the solid polymer type fuel cell has the operation temperature of 200°C or less which is low, hence besides the mobile power source, it is also expected to be used as the small and medium size low temperature operating type fuel cell such as stationary type power source or vehicle use.

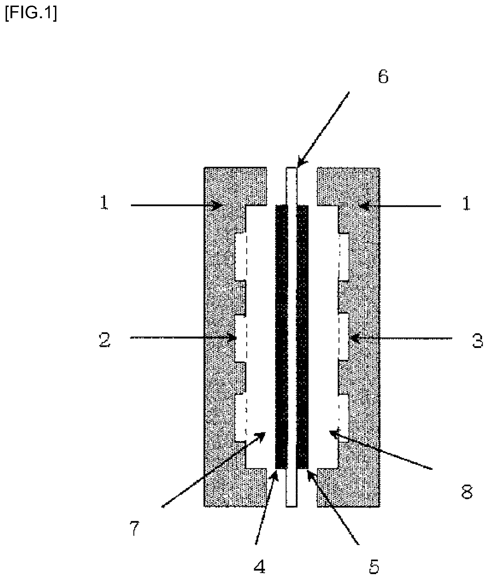

The solid polymer type fuel cell is the fuel cell which uses the solid polymer such as ionic exchange membrane or so as the electrolyte, and has low operating temperature. As the solid polymer type fuel cell, as shown in Fig.1, the space inside the battery partition wall 1 comprising fuel flow channels 2 and oxidant flow channels 3 respectively connecting to the outside are separated by an assembly body wherein an anode 4 and a cathode 5 are respectively bonded to both sides of the solid polymer electrolyte membrane 6. Thereby, the solid polymer type fuel cell has a basic structure comprising an anode chamber 7 connecting to the outside via the fuel flow channels 2, and a cathode chamber 8 connecting to the outside via oxidant flow channels 3. The anode 4 and the cathode 5 comprise a catalyst so that fuel or oxygen can react, and also comprise the ion conductive substance (ionomer). Further, in the solid polymer type fuel cell having such basic structure, the fuel such as hydrogen gas or liquid such as methanol or so is supplied to said anode chamber 7 via the fuel flow channels 2, while supplying the oxygen comprising gas such as oxygen and air or so as the oxidant to the cathode chamber 8 via the oxidant flow channels 3; and an external load circuit is connected between both electrodes; thereby the electric energy is generated by following described mechanism.

As the solid polymer electrolyte membrane 6, a cation exchange membrane (a positive ion exchange membrane) or an anion exchange membrane (a negative ion exchange membrane) can be used.

In case of using the anion exchange membrane, the anion exchange resin is used as the above mentioned ionomer. The catalyst and oxygen comprised in the electrode of the cathode 5 contacts with water; thereby generates hydroxide ions, and the hydroxide ions move to the anode chamber 7 by conducting inside the solid polymer electrolyte membrane 6; thereby generates water by reacting with hydrogen in the fuel gas at the anode 4. On the other hand, the electron which is generated together with water at the anode 4 moves to the cathode 5 via the external load circuit and the energy of this reaction is used as the electric energy.

As discussed in above, the fuel cell having the mechanism wherein the hydroxide ions move inside the anion exchange membrane is called anion exchange membrane type fuel cell or the alkaline membrane type fuel cell. Thus, the anion exchange membrane used in this fuel cell is also called as the alkaline electrolyte membrane. For the alkaline membrane type fuel cell, the atmosphere of both electrodes is basic. Also, due to the basic atmospheric condition, there are many metal catalysts which can be used as the catalysts. Hence, following described advantages can be obtained according to above mentioned two aspects. That is, the overvoltage of the oxygen reduction can be reduced, and further the voltage improvement can be expected by selecting the inactive cathode catalyst against the fuel which has permeated the membrane.

As the alkaline type fuel cell, there is an example wherein hydrogen is supplied to the anode side, and oxygen or air supplied to the cathode side, thereby generating the electricity (the patent article 1 and the non-patent article 1).

However, the anion exchange membrane has a disadvantage which generally has the limited thermal resistance. For example, when the alkaline type fuel cell using the alkaline exchange membrane is operated at 80°C, the power output is decreased to half within several hours. This is thought to be caused by the deterioration of the anion conductor such as the anion exchange membrane and the ionomer (the anion exchange resin).

Therefore, the anion conductor having excellent thermal resistance has been in demand. The patent article 2 proposes the use of the layered double hydroxides made of inorganic material and comprising two kinds of metal ions, instead of the conventional anion exchange material made of the organic material as the anion conductor having high durability.

## PRIOR ART

[Patent Article 1] JP Patent Application Laid Open No.JP 2007-042617
[Patent Article 2] WO 2010/109670
[Non-patent Article 1] Journal of Power Sources, 2008, Vol.178, p.620

## DISCLOSURE OF INVENTION

### PROBLEM TO BE SOLVED BY THE INVENTION

However, the inorganic anion conductor other than the above mentioned layered double hydroxides is barely known, thus the novel inorganic anion conductor which can be used as the alkaline electrolyte membrane of the fuel cell or so has been in demand.

### MEANS FOR SOLVING THE PROBLEM

The present inventors have carried out keen examination of various inorganic compounds, and have found that the molded product of the following inorganic compounds is suitable as the anion conductor, and also found that this can be suitably used as the anion conductor for the fuel cell and air cell or so.
That is, the first aspect of the present invention is an anion conductor comprising a molded product of a layered metal hydroxides shown in below formula.

$$[M_x(OH)_y(A)_{(\alpha x-y)/z}-nH_2O]... \qquad (1)$$

(wherein, "M" is a bivalent or trivalent metal cation, "$\alpha$" is a valence of the metal cation M, "A" is an anion, and "z" is a valence of the anion A; and when $(\alpha x-y)/z$ is 2 or more, each "A" may be different kinds of anion having same valency or may be anions having different valency, and "n" is a number of average molecules of an interlayer water included per one repeating unit).
For the anion conductor of the above mentioned invention, the metal cation M of the above formula is preferably any one selected from the group consisting of yttrium, zinc, and copper.
Further, the anion conductor of the present invention preferably comprises the pressure molded product of the layered metal hydroxide of the above mentioned formula, or the pressure molded product of a composition including the layered metal hydroxide and an ionomer.
Also, the second aspect of the present invention is the alkaline electrolyte membrane comprising the anion conductor as set forth in any one of the above.
Further, the third and fourth aspects of the present invention are an electrode assembly comprising the alkaline electrolyte membrane as set forth in above, a cathode catalytic layer provided on one side of said alkaline electrolyte membrane, and an anode catalytic layer provided on other side of said alkaline electrolyte membrane; and the fuel cell comprising said electrode assembly.
Further, the fifth aspect of the present invention is a layered metal hydroxide shown in below formula.

$$[Y_2(OH)_5(OH)_a(NO_3)_b(CO_3)_c-nH_2O]... \qquad (2)$$

(wherein, "a", "b" and "c" are respectively rational numbers between 0 or more and 1 or below which satisfies a + b + 2c = 1; and "n" is a number of average molecules of the interlayer water included per one repeating unit).

### EFFECT OF THE INVENTION

The anion conductor of the present invention constituted by the inorganic materials, thus compared to the conventional anion conductor constituted by the organic materials, the present invention has excellent thermal resistance and physical strength. Therefore, when used as the anion conductor for the fuel cell and air cell or so, it can be operated for a long period of time at higher temperature than the conventional ones. Also, the present invention comprises only one kind of metal cation, hence the composition is simple, therefore the composition can be easily controlled.
The conventionally known layered double hydroxides which comprise two metal cations neutralize the positive electric charge by the difference of the valence of two cations; hence the anions are introduced between the layers. On the contrary to this, for the layered metal hydroxides constituting the anion conductor of the present invention, the metal hydroxides or a part of the hydroxide ions is substituted by other anions, while maintaining the electrical neutrality, there is a common structural characteristic wherein a part of the anions exist between the cationic layers. Due to such structural characteristic, the anions present between the layers can freely move between the layers, thereby exhibiting the anion conductivity. Such was firstly found by the present inventors, and has provided the novel inorganic anion conductor, which has significant technical importance.

## BRIEF DESCRIPTION OF THE DRAWINGS

Fig.1    is the conceptual figure showing the basic structure of the solid polymer type fuel cell according to the present invention.
Fig.2    is the schematic figure showing the air cell produced in the example 12.
Fig.3    is the schematic figure of the measured cell of the vapor concentration cell produced in the example 13.

The layered metal hydroxides used for the layered anion conductor of the present invention is the compound shown by the below formula (1).

$$[M_x(OH)_y(A)_{(\alpha x-y)/z}-nH_2O]... \qquad (1)$$

In the above formula, "M" is bivalent or trivalent metal cation. The metal cation M is a single kind of metal cation. "$\alpha$" is a valence of the metal cation M. When the metal cation M shows plurality of valency, it is bivalent or trivalent, and the valency of metal cation M of such case refers to the valency in terms of number average. The metal cation M is preferably a bivalent single metal cation, or trivalent single metal cation. "A" is anion. "A" may be one kind of anion, or plurality of kinds of anion. In case, the anions are the plurality of kinds, it is monovalanet, divalent, or trivalent; and preferably it is monovalent or bivalent. "z" is a valency of the anion A. In case the anion A comprises the plurality of kinds of anions having different valency, the valency of the anion A refers to the valency in terms of the number average. When $(\alpha x-y)/z$ is 2 or more, each "A" may be different kinds of anion having same valency or may be anions having different valency. Preferably, $(\alpha x-y)/z$ is 0.2 to 1.2, and also preferably it has the structure including the anion A. "n" refers to a number of average molecules of an interlayer water included per one repeating unit lattice (one repeating unit) of the layered metal hydroxides.

From other point of view, in case the metal cation M is a divalent single metal cation, and the anion A includes either one or both of monovalent anion ($A^-$) and bivalent anion ($A^{2-}$), the layered metal hydroxides used for the anion conductor of the present invention is shown by below formula (1 a).

$$L(M^{2+})_x(OH)_y(A^-)_a(A^{2-})_b-nH_2O]... \qquad (1a)$$

In the above formula, $2x = y + a + 2b$, and the electric charge as a whole is 0. y/x is 0 or more, and preferably more than 0, more preferably 0.5 to 1.8, even more preferably 1.2 to 1.7, and preferably comprises hydroxide ion. Also, $(a + 2b) / x$ is 0 or more, preferably more than 0, more preferably 0.2 to 1.5, and even more preferably 0.3 to 0.8; and preferably comprises the anion other than hydroxide ion. Also, either one or both of anion ($A^-$) and anion ($A^{2-}$) having different valency may be included.

Also, from the different point of view, in case the metal cation M is trivalent single metal cation, and the anion A includes either one or both of the monovalent anion ($A^-$) and bivalent anion ($A^{2-}$), then the layered metal hydroxides used for the anion conductor of the present invention is as shown by below formula (1 b).

$$L(M^{3+})_x(OH)_y(A^-)_a(A^{2-})_b-nH_2O]... \qquad (1b)$$

In the above formula, $3x = y + a + 2b$, and the electric charge as a whole is 0. y/x is 0 or more, and preferably more than 0, more preferably 1.0 to 2.8, even more preferably 2.0 to 2.7, and preferably comprises hydroxide ion. Also, $(a + 2b) / x$ is 0 or more, preferably more than 0, more preferably 0.2 to 2.0, and even more preferably 0.3 to 1.0; and preferably comprises the anion other than hydroxide ion. Also, either one or both of anion ($A^-$) and anion ($A^{2-}$) having different valency may be included.

The layered metal hydroxides comprise the crystalline structure of $CdI_2$ as the basic layer, and have the layered structure wherein the anion is included between such basic layers. In such layered structure, said basic layer is the cationic metal hydroxide layer, and maintains the electrical neutrality, thus anion exist between such layers. In order to maintain good layered structure, the layered metal hydroxide preferably includes anion other than the hydroxide ion.

In the above formula, "M" is the metal cation of the metal hydroxides which constitutes said basic layer, and "M" is the metal cation which can be bivalent or trivalent, further "M" is a single kind of the metal. As example of the metal of suitable "M", the transition metals of Group 3 to Group 11, the metals of Group 12, and lanthanoid metals can be mentioned. Further specifically, as further suitable metals, yttrium, zinc, copper or so can be mentioned. Therefore, as the metal cation M, trivalent yttrium, bivalent zinc, and bivalent copper are preferable.

In the above formula, "A" is the anion having valency of "z" which can take the layered structure by being present between said basic layers. These anions are present together with the hydroxide ion in order to neutralize the positive charge of the metals. The basic layer forms the layered structure by metal ions and the hydroxide ions, and has positive charge, but the above mentioned anion A is present to maintain the electric neutrality, thus as a whole it is electrically neutral. These anions which are present between the layers are thought to carry the ion conductivity of the metal hydroxides.

The anion A may be an inorganic anion or organic anion. The valance of anion is not particularly limited; however from the point of maintaining the layered structure, it is monovalent or bivalent. As inorganic anions, halogen ions such as fluorine ion, chlorine ion, bromide ion, iodine ion or so; nitride ions such as nitrate ion, nitrite ion or so; carbonate ion; bicarbonate ion; sulfate ion; sulfite ion; thiocyanate ion; cyanate ion; and hydroxide ion or so may be mentioned. Also, as the organic anion, alkylmonocarboxylic ions such as formate ion, acetate ion, propionate ion, butyrate ion, octate ion, lactate ion or so; aromatic monocarboxylic acid ions such as benzoate ion; alkyldicarboxylic acid ions such as oxalate ion, maleate ion, fumarate ion, adipate ion or so; aromatic dicarboxylic acid ion such as phthalate ion or so may be mentioned.

As for specific examples of the suitable "A", ions made of halogen atoms such as fluorine ion, chlorine ion, bromide ion, iodine ion or so; sulfate ion, sulfite ion, nitrate ion, nitrite ion, carbonate ion, bicarbonate ion, hydroxide ion or so may be mentioned. From the high ion conductivity and the easiness of the ion exchange, "A" is at least one selected from the group consisting of chlorine ion, nitrate ion, carbonate ion, bicarbonate ion, and hydroxide ion.

These anions do not necessarily have to be single kinds, or do not necessarily have to be the same valence. For example, the layered metal hydroxides may be prepared wherein the three kinds of anions of $OH^-$, $NO_3^-$ and $Co_3^{2-}$ exist together. In order to maintain a good layered structure, the anions of the layered hydroxides preferably mainly comprises $OH^-$, and further comprises $NO_3^-$ and/or $CO_3^{2-}$.

In the above formula, "n" represents the number of water molecule per unit of above formula (1) present between the layers. The amount of the water present between the layers (interlayer water) differs depending on the composition of the layered metal hydroxides, the surrounding environment of the layered metal hydroxides, and the type of the anion present between the layers; however usually it is within the range of 1 to 10. In other words, the value of "n" itself is not essential for the compound, and for example in case large amount of the water is present in the surrounding, it barely have impact on the anion conductivity. Therefore, in the layered metal hydroxides shown in the above formula (1), "-$H_2O$" relating to the interlayer water may be omitted.

Among the layered metal hydroxides shown by said formula (1), as the specific example of the suitable compound of the anion conductor, $[Zn_5(OH)_8(NO_3)_2-nH_2O]$ and $[Cu_2(OH)_3(NO_3)-nH_2O]$ may be mentioned.

Among the layered metal hydroxides shown by said formula (1), the layered yttrium hydroxides shown by the below formula (2) wherein the metal cation M is yttrium ($Y^{3+}$) is a novel compound, and this was firstly produced by the present inventors and also the anion conductivity is firstly confirmed.

$$[Y_2(OH)_5(OH)_5(NO_3)_b(CO_3)_c-nH_2O]...\qquad(2)$$

In the above formula, "a", "b" and "c" are respectively rational numbers between 0 or more and 1 or below which satisfies a + b + 2c = 1. Here, "a", "b" and "c" respectively represents the average ratio of each anion in the entire layered metal hydroxides, thus such relation is satisfied. Preferably, b + 2c is more than 0, and 1 or less. When b + 2c is 0, the anions in the above formula (2) are all hydroxide ions. In such case, the compound of the above formula (2) may be unable to maintain good layered structure. As the preferable embodiment, "b" is 1, "a" and "c" are 0. Also, as other preferable embodiment, the structure wherein "a" is 0, "b" is less than 1, and "c" is more than 0; that is the structure wherein part of $NO_3^-$ is substituted to $CO_3^{2-}$ may be mentioned. Also, "n" of the above formula refers to a number of average molecules of an interlayer water included per one repeating unit, as similar to other layered metal hydroxides.

The layered metal hydroxides shown by the above formula (2) can be produced for example as described in below. That is, a nitrate ion of Y is dissolved in the water, and then while stirring this solution, the solution comprising sodium hydroxides and the sodium nitrate is dropped little by little. Thereby, the mixture solution forms the solution including the precipitation. This is filtered and dried, then the white powder is obtained which is the layered metal hydroxides shown by said formula (2) wherein a = 0, b = 1, c = 0, and "n" is 1 to 10.

When the above procedure is carried out around 20°C, the particle diameter of the obtained white powder is generally 0.01 μm to 100 μm.

Further, the solution including the precipitation obtained by the above procedure is introduced into the thermal resistance sealed container made of resin, and a hydrothermal treatment can be carried out for several hours under constant temperature. By carrying out the hydrothermal treatment, the particle diameter can be controlled.

The temperature of the hydrothermal treatment varies depending on the heat resistant temperature of the thermal resistance sealed container, and usually it is within the range 20°C to 200°C. The higher the temperature is, the larger the obtained particle diameter is. The time of the hydrothermal treatment is generally several hours to several hundred hours. The longer the time of the hydrothermal treatment is, the larger the obtained particle diameter is.

The particle diameter can be confirmed by the below method. That is, directly obtaining the particle dimeter from the image obtained by the observation using the optical microscope, the scanning electron microscope (SEM), the transmission electron microscope (TEM); or carrying out the X ray diffraction method (XRD) spectrometry, then applying the peak width of the obtained spectrum to the approximation equation known as Scherrer's formula or so may be mentioned.

Here, Scherrer's formula is as shown in below.

$$D=K \cdot \lambda/(B \cdot \cos\theta) \ ...(3)$$

"K" is Scherrer's constant, and various values can be used depending on the definition of the crystal particle diameter to be measured. For example, in case the particle diameter is defined by the volume average thickness, then $K = 2/\pi = 0.63661$ is used; in case the size is defined by the volume average particle diameter of the spherical crystal particle, then $K = 8/3\pi = 0.84882$ is used. "$\lambda$" is the wavelength of X ray used for the measurement, and "B" is the width of the line peak width which is caused by the crystal particle being finite, and "$\theta$" is the half value of the diffraction angle $2\theta$ of the peak. In general, the smaller the particle diameter is, the larger the peak width B tends to be.

Whether the obtained compound has formed the layered structure can be verified as described in below. That is, the spectrum obtained by X ray diffraction method spectrometry comprises the peak position derived from the layered structure and the distance between the layers. By analyzing this, the layered structure can be verified.

In case of changing the kind of the anions, the ion exchange procedure can be carried out in the aqueous solution including said anion. For example, the ion exchange procedure can be carried out by immersing the anion conductor of the present invention to the solution comprising the salt of anion to be exchanged in the concentration of 0.1 mol/L to 10 mol/L and then leaving or stirring for 1 hour or longer. Here, the distance between the layers changes, however it has been verified that the layered structure is maintained according to the above mentioned method.

Hereinabove, the production method of the layered metal hydroxides shown by said formula (2) has been described. However, other layered metal hydroxide can be similarly produced by changing the nitrate of Y used as the source material of the metal cation M respectively to the nitrate of predetermined other metals, and to other water soluble salt.

In many cases, the layered metal hydroxides are produced as powder. Thus, when using the ion conductor as the sheet form product, the molding is necessary. The molding can be carried out by pressure molding the layered metal hydroxides using a hydraulic press or so. The pressure when applying the pressure is generally 1 MPa to 100 MPa, and preferably it is 5 MPa to 60 MPa.

By comprising the ionomer (ion conductive resin) as the binder during the pressure molding, the physical strength of the obtained molded product is increased, and the ion conductivity is increased, thus it is preferable. The ionomer has the characteristic as the binder without particular limitation, and also as long as it is the substance capable of conducting the anion, it is not particularly limited. As example which is suitably used, the anion exchange resin may be mentioned. As such anion exchange resin, the polymer compound shown in JP Patent Application Laid Open No.2009-152075 can be used as the anion conductor binder resin.

The amount of the ionomer to be included is not particularly limited, and in general it is 1 to 200 mass% (1/100 to 2 times of mass), preferably 1 to 100 mass%, and more preferably 1 to 40 mass% with respect to the mass of the layered metal hydroxides. The smaller the amount of the ionomer is, the smaller the effect of the binder is, and also the smaller the effect of increasing the ion conductivity is. The larger the amount of the ionomer is, the obtained molded product will exhibit the characteristic which only depends on the ionomer strength and the ion conductivity. Therefore, it is important to use at the optimum content.

As the example of the method to include the ionomer in the molded product, the following can be mentioned. The ionomer is dissolved in the organic solvent, and the solution having the concentration of 1 to 40% is prepared. Here, the predetermined amount of the layered metal hydroxides are introduced, and dispersed by stirring or by ultrasonic irradiation. Then, the organic solvent is evaporated in the air or in vacuo, thereby the solid wherein both are uniformly mixed can be obtained. Then, this is pressured molded; thereby the molded product can be obtained. Also, the molded product which does not comprise the ionomer can be produced in advance, and this is impregnated with the organic solvent of the ionomer, then drying in the air, thereby the ionomer can be comprised in the molded product.

Alternatively, the glass fiber or so is impregnated to the dispersion of the layered metal hydroxides so that the layered metal hydroxides are supported on the glass fiber, then this is press molded thereby the molded product can be obtained.

The molded product obtained using the layered metal hydroxides is the anion conductor, thus conducts the hydroxide ions. Therefore, for example by molding into a sheet form or a membrane form, it can be used as the alkaline electrolyte membrane. That is, it can be used as the electrolyte membrane for the alkaline membrane type fuel cell and air cell or so.

Also, by providing the cathode catalytic layer on one side of the molded product of the layered metal hydroxides formed into a membrane form, and by providing the anode catalytic layer on other side of the molded product, it can be used as the membrane-electrode assembly (MEA) of the alkaline membrane type fuel cell or so.

The method of providing the cathode or anode catalytic layer to the molded product of the layered metal hydroxides molded into a membrane form is for example as described in below. The carbon powder carrying the platinum particle having the particle diameter of several nanometers (this is called platinum catalyst supported on carbon) is introduced into the ionomer, and then dispersed by stirring or by ultrasonic irradiation. This is called a catalyst ink. The catalyst ink is adhered on the surface of the molded product by coating or printing or so, then dried thereby the catalytic layer is formed.

The membrane-electrode assembly produced as such can be incorporated into the commercially available fuel cell, and thereby it can be operated as the fuel cell.

EXAMPLES

Example 1 (The production example 1 of the basic layered yttrium hydroxides: $[Y_2(OH)_5(NO_3)-nH_2O]$)

3.75 ml of the mixture solution comprising 2.1 mol/l of NaOH and 1.44 mol/l of $NaNO_3$ was dropped into 11.25 ml of 0.44 mol/l $Y(NO_3)_3$ solution and stirred; thereby the white precipitation was obtained. The solution including the white precipitation was placed in a sealed container and left for 30 hours at 25°C. Then, it was transferred to a centrifuge separation container to carry out the centrifugal separation (15,000 rpm, 30 minutes, 20°C), and then the white precipitation was collected. The white precipitation and water were placed in a centrifuge separation container, then after the centrifugal separation, only the water was discarded. This procedure (washing procedure) was repeated for four times to remove the remaining source material. Then, this was vacuum dried at room temperature; thereby 0.8 g of the white powder form product (a compound 1) was obtained.

By carrying out the crystalline structure analysis using FT-IR (Fourier transform infrared spectroscopic analysis) and XRD, the compound 1 was confirmed to have the layered structure; and also confirmed that the composition was $[Y_2(OH)_5(NO_3)-nH_2O]$.

Example 2 (The production example 2 of the basic layered yttrium hydroxides: $[Y_2(OH)_5(NO_3)-nH_2O]$)

The heat resistant container was used as the sealed container, and the temperature for leaving for 30 hours was set to 50°C, 75°C, 100°C, 125°C, 150°C, and then the same procedure as the example 1 was carried out. Thereby, $[Y_2(OH)_5(NO_3)-nH_2O]$ as the white powder was obtained (compounds 2 to 6). The physical properties of the obtained compounds 2 to 6 are shown in Table 1. It was confirmed that the higher the temperature is, the smaller the half bandwidth of spectrum peak of XRD measurement is and the larger the particle diameter is.

**Table 1**

|  | Temperature while left still | Half bandwidth of XRD spectrum peak ($2\theta \fallingdotseq 10°$) |
|---|---|---|
| Compound 2 | 50 | 0.19 |
| Compound 3 | 75 | 0.17 |
| Compound 4 | 100 | 0.12 |
| Compound 5 | 125 | 0.097 |
| Compound 6 | 150 | 0.083 |

Example 3 (The production example of $[Y_2(OH)_5(NO_3)x(CO_3)y-nH_2O]$)

1.3g of $[Y_2(OH)_5(NO_3)-nH_2O]$ powder obtained as same as the example 1 was immersed in 1 mol/l of $K_2CO_3$ for 7 days at 25°C to exchange the nitrate ion ($NO_3^-$) with carbonate ion ($CO_3^{2-}$). According to FT-IR analysis of the white powder of after the washing procedure, an increase in a peak (1521 $cm^{-1}$) of an asymmetric stretching vibration of $COO^-$ indicating the presence of carbonate ion was confirmed. Thus, the exchange to carbonate ion was confirmed.

Example 4 (the production example of the basic layered copper hydroxides: $[Cu_2(OH)_3(NO_3)-nH_2O]$)

25 ml of 0.679 mol/l NaOH solution was dropped into 10 ml of 3.5 mol/l $Cu(NO_3)_2$ thereby obtained the blue green precipitation. Immediately after the precipitation was formed, the centrifugal separation (15,000 rpm, 30 minutes, 20°C) was carried out and the blue green precipitation was collected. The washing procedure was repeated for 4 times, and vacuum dried at room temperature; thereby 7.5 g of the powder form product (compound 8) was obtained.
By carrying out the crystalline structure analysis using FT-IR (Fourier transform infrared spectroscopic analysis) and XRD, the compound 8 was confirmed to have the layered structure; and confirmed that the composition was $[Cu_2(OH)_3(NO_3)-nH_2O]$.

Example 5 (The production example of the basic layered zinc hydroxides: $[Zn_5(OH)_8(NO_3)_2-nH_2O]$)

0.1 mol/l of NaOH solution was dropped into 50 ml of 0.4 mol/l $Zn(NO_3)_2$ at room temperature, and it was controlled to pH 7.0 ± 0.1; thereby the white precipitation was obtained. The solution comprising the white precipitation was left for 12 hours at room temperature. Then, the centrifugal separation (15,000 rpm, 30 minutes, 20°C) was carried out and the white precipitation was collected. The washing procedure was repeated for 4 times, and vacuum dried at room temperature; thereby 3.2 g of the white powder form product (compound 9) was obtained.
By carrying out the crystalline structure analysis using FT-IR (Fourier transform infrared spectroscopic analysis) and XRD, the compound 9 was confirmed to have the layered structure; and confirmed that the composition was $[Zn_5(OH)_8(NO_3)_2-nH_2O]$.

Example 6 (the production example 1 of the ion conductive membrane)

The compound 5 and the compound 9 were respectively scaled to about 0.15 g, and then these were introduced into the mold of the cylindrical shape (the diameter of 1 cm). Then, the uniaxial pressure molding was carried out at 40 MPa, thereby the pellet form sample was obtained. The above mentioned pellet was vacuum sealed in the plastic bag and the compression treatment of Cold Isostatic Pressing (CIP) at 150 MPa and 1 min was carried out in the water, thereby the sheet form ion conductive membranes having the thickness of 0.8 mm to 0.9 mm were obtained (the ion conductive membranes 1 and 2).

Example 7 (the production example 2 of the ion conductive membrane)

The anion exchange resin (the concentration of 5 mass%, made by Tokuyama Corporation) was added to 1 g of the compound 1 so that it is 15 mass% with respect to the powder weight, then kneaded. Next, the solvent was evaporated by vacuum drying at room temperature. This powder was introduced into the mold of the cylindrical shape (the diameter of 1 cm). Then, the uniaxial pressure molding was carried out at 40 MPa, thereby the ion conductive membrane (the ion conductive membrane 3) having a sheet form was obtained.

Example 8 (The production example 3 of the ion conductive membrane)

1 g of the compound 1 was placed in 30 ml of glass bottle together with 10 ml of acetone, and the compound 1 was dispersed by ultrasonic irradiation. To the obtained suspension, the glass fiber filter having 2 cm square was immersed, and then it was taken out. After drying the glass fiber filter, it was immersed in the suspension, and then dried again. This was applied with the pressure of 5 MPa using the hydraulic pressor, thereby the ion conductive membrane (the ion conductive membrane 4) having a sheet form was obtained.

Example 9 (The production of the membrane-electrode assembly)

0.1 g of platinum catalyst supported on carbon (made by Tanaka Kikinzoku Kogyo) was added to 1 g of the compound 1, and kneaded for 1 hour in a mortar. Then, 5 g of anion exchange resin solution (the concentration of 5 mass%, made by Tokuyama Corporation) was added, and further kneaded for 30 minutes. This was coated on both sides of the ion conductive membrane 3 so that the thickness is about 20 μm, and the catalytic electrode layer for the fuel cell was formed on each of the ion conductive membranes 1 to 4, thereby the membrane-electrode assembly (MEA) was obtained.

Example 10 (the production of the fuel cell)

The membrane-electrode assembly obtained in the example 9 was adhered to silicon sheet of the thickness of 2 mm and having 1 cm square hole at the center. The size of the silicon sheet was 50 mm x 50 mm. This was assembled to the commercially available fuel cell (the fuel cell made by Electrochem); thereby the fuel cell having the structure shown in Fig.1 was produced.

Example 11 (the production of the air cell)

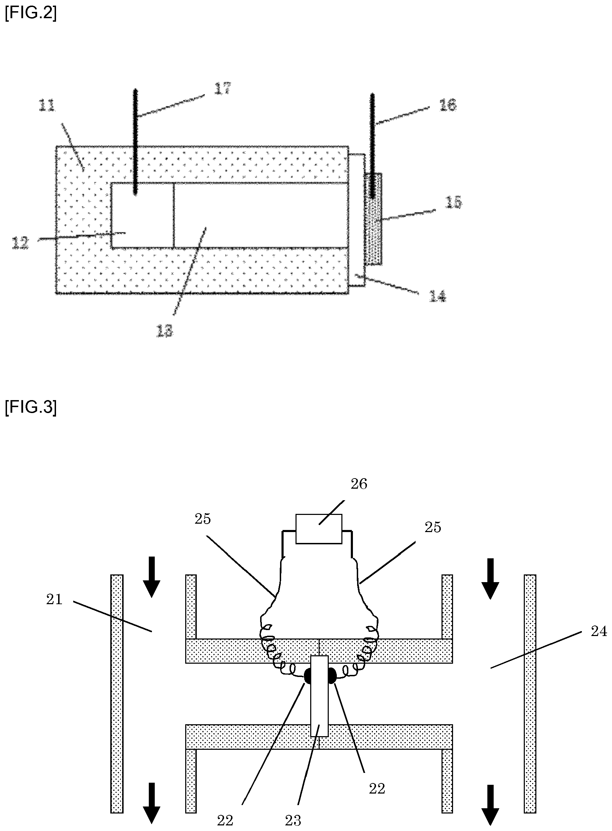

Using the ion conductive membrane 1 obtained in said example 6, the air cell having the structure shown in Fig.2 was produced. At the negative electrode, zinc dissolves into the electrolytic solution (KOH solution), and also the electron is taken out to outside from the negative electrode terminal of the air cell. Also, at the positive electrode, the electron which is generated at the negative electrode and flowing in by going through the load circuit reacts with water and oxygen at the surface of the catalytic electrode layer, thereby OH-ions were generated. These OH- ions were supplied to the electrolytic solution via the ion conductive membrane of the present invention. Due to such series of reactions, the electric power was taken from between the air cell positive electrode and the air cell negative electrode; hence it functions as the air cell.

Example 12 (the confirmation of the anion conductivity by a vapor concentration cell)

Pt paste was coated to both sides of the ion conductive membrane 3 molded into a sheet form obtained in said example 7, then to each side of the part coated with paste, a potentiostat probe was connected. Thereby, in case the electromotive force is generated at the ion conductive membrane, the voltage thereof can be measured.
Next, this ion conductive membrane was installed to the measuring cell shown in Fig.3, and the nitrogen gas having different humidity were provided to each side. When the humidified gas of 90% RH was provided to one side and the humidified gas of 10% RH was provided to other side, the electromotive force of 0.04 V was stably obtained wherein the higher humidified side was positive.
A part of the water molecule at the both sides is dissociated into $H^+$ and OH- at the ion conductive membrane surface; but the concentration is higher at the higher humidified side, and lower at the lower humidified side. Thus, the ion that can move will move from the higher humidified side to the lower humidified side. Thereby, the electric potential is generated between the both sides of the membrane. The higher humidified side is positive, thus this means that OH- and the anion in the membrane will move from the higher humidified side to the lower humidified side. That is, the anion conductor of the present invention was confirmed to have the anion conductivity.

Example 13 (the measurement of the conductivity of the ion conductive membrane)

Pt paste was respectively coated on both sides of the ion conductive membrane 1 and the ion conductive membrane 2 obtained in the example 6, and this was mounted on the electrical conductivity measurement cell having Ti mesh lead. The cell was placed in the thermostat (30°C or 70°C) humidified to 100% RH, then after the AC resistance was stabilized, the AC impedance measurement was carried out by a two terminal method at the frequency range of 4 to $10^6$ Hz (the amplitude of 2V).
The measurement results are shown in below. Both of them have the electrical conductivity, thus the ion conductive membrane of the present invention was confirmed to have the ion conductivity.

Ion conductivity membrane 1    $2.5 \times 10^{-6}$ Scm$^{-1}$
Ion conductivity membrane 2    $2.1 \times 10^{-6}$ Scm$^{-1}$

All of the compounds 1 to 9 shown in the examples 1 to 5 have the structure wherein the anions are present between the cationic layered compounds. As long as it is between the layers of these layered compounds, the anion can freely move. Therefore, all of these compounds clearly comprise the anion conductivity.

**REFERENCES OF NUMERALS**

1    Battery partition wall
2    Fuel flow channel
3    Oxidant gas flow
4    Anode (the mixture of the catalyst and the anion exchange resin)
5    Cathode (the mixture of the catalyst and the anion exchange resin)

6    Solid polymer electrolyte (anion exchange membrane)
7    Anode chamber
8    Cathode chamber
11   Battery case
12   Metal zinc
13   8 mol/L potassium hydroxide solution
14   Ion conductive membrane
15   Catalytic electrode layer
16   Air cell positive electrode terminal
17   Air cell negative electrode terminal
21   Nitrogen gas flow path 1
22   Pt paste
23   Ion conductive membrane
24   Nitrogen gas flow path 2
25   Probe wire of potentiostat
26   Potentiostat

**Claims**

1. An anion conductor comprising a molded product of a layered metal hydroxide shown in below formula (1).

$$[M_x(OH)_y(A)_{(\alpha x-y)/z}\text{-}nH_2O] \ldots \qquad (1)$$

(wherein, "M" is a bivalent or trivalent metal cation, "$\alpha$" is a valence of the metal cation M, "A" is an anion, and "z" is a valency of the anion A; and when $(\alpha x-y)/z$ is 2 or more, each "A" may be different kinds of anion having same valency or may be anions having different valency, and "n" is a number of average molecules of an interlayer water included per one repeating unit).

2. The anion conductor as set forth in claim 1, wherein the metal cation M of the formula (1) is any one selected from the group consisting of yttrium, zinc, and copper.

3. The anion conductor as set forth in claim 1 or 2 comprising the pressure molded product of the layered metal hydroxide of the formula (1), or the pressure molded product of a composition including the layered metal hydroxide and an ionomer.

4. An alkaline electrolyte membrane comprising the anion conductor as set forth in any one of claims 1 to 3.

5. A membrane-electrode assembly comprising the alkaline electrolyte membrane as set forth in claim 4, a cathode catalytic layer provided on one side of said alkaline electrolyte membrane, and an anode catalytic layer provided on other side of said alkaline electrolyte membrane.

6. A fuel cell comprising the electrode assembly as set forth in claim 5.

7. A layered metal hydroxide shown in below formula (2).

$$[Y_2(OH)_5(OH)_a(NO_3)_b(CO_3)_c\text{-}nH_2O] \ldots \qquad (2)$$

(wherein, "a", "b" and "c" are respectively rational numbers between 0 or more and 1 or below which satisfies $a + b + 2c = 1$; and "n" is a number of average molecules of the interlayer water included per one repeating unit).

**Amended claims under Art. 19.1 PCT**

1. An anion conductor comprising a molded product of a layered metal hydroxide shown in below formula (1).

$$[M_x(OH)_y(A)_{(\alpha x-y)/z}\text{-}nH_2O] \ldots \qquad (1)$$

(wherein, "M" is a metal cation of zinc or copper, "$\alpha$" is a valence of the metal cation M, "A" is an anion, and "z" is a valence of the anion A; and when $(\alpha x-y)/z$ is 2 or more, each "A" may be different kinds of anions having same valency or may be an anions having different valency, and "n" is a number of average molecules of an interlayer water included per one repeating unit).

**2.** The anion conductor as set forth in claim 1 comprising the pressure molded product of the layered metal hydroxide of the formula (1), or the pressure molded product of a composition including the layered metal hydroxide and an ionomer.

**3.** An alkaline electrolyte membrane comprising the anion conductor as set forth in claims 1 or 2.

**4.** A membrane-electrode assembly comprising the alkaline electrolyte membrane as set forth in claim 3, a cathode catalytic layer provided on one side of said alkaline electrolyte membrane, and an anode catalytic layer provided on other side of said alkaline electrolyte membrane.

**5.** A fuel cell comprising the electrode assembly as set forth in claim 4.

[FIG.1]

[FIG.2]

[FIG.3]

## INTERNATIONAL SEARCH REPORT

| | International application No. |
|---|---|
| | PCT/JP2015/059075 |

**A. CLASSIFICATION OF SUBJECT MATTER**
*H01M8/02*(2006.01)i, *C01F17/00*(2006.01)i, *C01G3/00*(2006.01)i, *C01G9/00* (2006.01)i, *H01B1/06*(2006.01)i, *H01M8/10*(2006.01)i

According to International Patent Classification (IPC) or to both national classification and IPC

**B. FIELDS SEARCHED**

Minimum documentation searched (classification system followed by classification symbols)
H01M8/02, C01F17/00, C01G3/00, C01G9/00, H01B1/06, H01M8/10

Documentation searched other than minimum documentation to the extent that such documents are included in the fields searched
Jitsuyo Shinan Koho          1922–1996   Jitsuyo Shinan Toroku Koho   1996–2015
Kokai Jitsuyo Shinan Koho    1971–2015   Toroku Jitsuyo Shinan Koho   1994–2015

Electronic data base consulted during the international search (name of data base and, where practicable, search terms used)
CAplus(STN), REGISTRY(STN)

**C. DOCUMENTS CONSIDERED TO BE RELEVANT**

| Category* | Citation of document, with indication, where appropriate, of the relevant passages | Relevant to claim No. |
|---|---|---|
| X | Sheena A., et al., Precipitation synthesis of lanthanide hydroxynitrate anion exchange materials, $Ln_2(OH)_5NO_3 \cdot H_2O$ (Ln = Y, Eu–Er), Journal of Solid State Chemistry, 2009.02.06, Vol. 182, No. 5, pp. 1070-1074 | 1–7 |
| X | Laura J., et al., $Ln_2(OH)_5NO_3 \cdot xH_2O$ (Ln = Y, Gd–Lu): A Novel Family of Anion Exchange Intercalation Hosts, Chemistry of Materials, 2007.12.05, Vol. 20, No. 1, pp. 335-340 | 1–7 |
| X | Laura J., et al., Synthesis and anion exchange chemistry of new intercalation hosts containing lanthanide cations, $Ln_2(OH)_5(NO_3) \cdot xH_2O$ (Ln = Y, Gd–Lu), Journal of Physics and Chemistry of Solids, 2007.11.09, Vol. 69, No. 5-6, pp. 1070-1074 | 1–7 |

☐ Further documents are listed in the continuation of Box C.          ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 June 2015 (26.06.15) | 07 July 2015 (07.07.15) |

| Name and mailing address of the ISA/ | Authorized officer |
|---|---|
| Japan Patent Office | |
| 3-4-3,Kasumigaseki,Chiyoda-ku, | |
| Tokyo 100-8915,Japan | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007042617 A
- WO 2010109670 A

- JP 2009152075 A

**Non-patent literature cited in the description**

- *Journal of Power Sources,* 2008, vol. 178, 620